# EUROPEAN PATENT APPLICATION

(11) **EP 4 036 170 A1**
(43) Date of publication of application: **03.08.2022**
(21) Application number: 21154340.0
(22) Date of filing: 29.01.2021
(51) Int. Cl.: C08L 69/00

(54) **MOLDABLE COMPOSITION AND MOLDED ARTICLES MADE THEREFROM**

(71) Applicant: SHPP Global Technologies B.V., 4612 PX Bergen op Zoom (NL)
(72) Inventor: Zhao, Wei, Mt. Vernon, Indiana 47620 (US); Wojcicki, Erin M., Pittsfield, Massachusetts 01201 (US); Assink, Roland Sebastian, 4612 PX Bergen op Zoom (NL)
(74) Representative: Balder IP Law, S.L.

(57) **Abstract**

A moldable composition includes particular amounts of a high-heat copolycarbonate, a bisphenol A homopolycarbonate composition, a poly(carbonate-siloxane), and optionally, an additive composition. The moldable composition exhibits a desirable combination of properties including improved melt volume-flow rate and an average ejection force from a mold. Methods of manufacturing the composition and molded articles prepared therefrom are also described.

## Description

### BACKGROUND

Polycarbonates are useful in the manufacture of articles and components for a wide range of applications, from automotive parts to electronic appliances. For example, high-heat polycarbonates can be well suited for use in reflectors following metallization, for example, for automotive lighting applications. However, while known high-heat polycarbonate compositions can exhibit good metal adhesion, this can be problematic during a molding process, where it can be difficult to eject a molded part from a metal mold.

There accordingly remains a need in the art for moldable high-heat polycarbonate compositions that have improved mold release properties. It would be a further advantage if the compositions exhibited good metal adhesion for use in applications where metallization may be desired.

### SUMMARY

A moldable composition comprises 35-80 weight percent of a high-heat copolycarbonate derived from a high-heat bisphenol monomer and optionally a low-heat bisphenol A monomer, wherein the high-heat bisphenol monomer is a monomer where the corresponding homopolycarbonate of the monomer has a glass transition temperature of 155°C or higher determined according to ASTM D3418 at a 20°C per minute heating rate; 10 to 65 weight percent a bisphenol A homopolycarbonate composition comprising a bisphenol A homopolycarbonate having a weight average molecular weight of 16,000 to 19,500 grams per mole as determined by gel permeation chromatography using polystyrene standards and calculated for polycarbonate; 1 to 10 weight percent of a poly(carbonate-siloxane) having a siloxane content of 10-70 weight percent, based on the total weight of the poly(carbonate-siloxane); and optionally, 0.1 to 10 weight percent of an additive composition, wherein the moldable composition has a melt volume-flow rate of greater than 40 cubic centimeters per 10 minutes, as determined according to ASTM D1238-04 at 330°C using a 2.16 kilogram load and a 360 second dwell time, and an average ejection force of less than 1000 pound-force at a cooling time of 40 seconds and a pack pressure of 45 pounds per square inch.

A molded article comprises the moldable composition.

A method for forming the molded article comprises molding the article; and metallizing a surface of the article.

The above described and other features are exemplified by the following figure and detailed description.

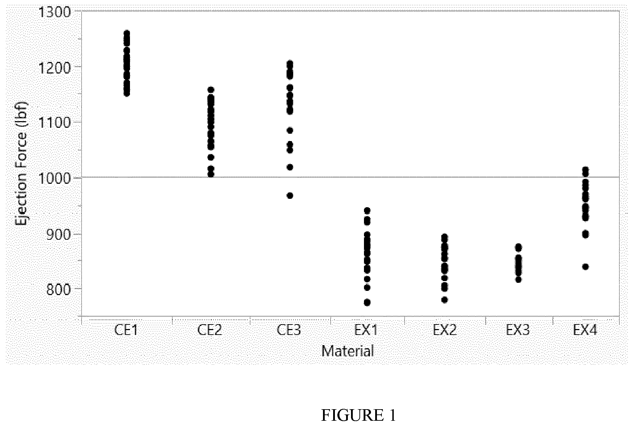

### BRIEF DESCRIPTION OF THE FIGURE

The FIGURE is a graph showing ejection force from a mold.

### DETAILED DESCRIPTION

The inventors hereof have discovered a moldable polycarbonate composition having a desired combination of good mold release and metal adhesion without sacrificing other mechanical properties. The compositions include a high-heat copolycarbonate derived from a high-heat bisphenol monomer and optionally a low-heat bisphenol A monomer, a bisphenol A homopolycarbonate composition, a poly(carbonate-siloxane) having a siloxane content of 10 to 70 weight percent, based on the total weight of the poly(carbonate-siloxane), and, optionally, an additive composition. Surprisingly and unexpectedly, the moldable compositions described herein incorporating particular amounts of a poly(carbonate-siloxane) exhibited a substantial improvement in mold release characteristics. As a further advantage, the compositions also exhibited good metal adhesion upon metallization.

The individual components of the polycarbonate compositions are described in further detail below.

"Polycarbonate" as used herein means a polymer having repeating structural carbonate units of formula (1) 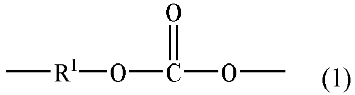 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ can be derived from a bisphenol of formula (3) 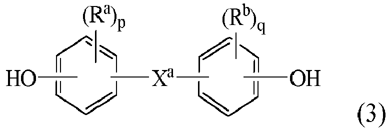 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond,-O-, -S-, -S(O)-, -S(O)₂-, -C(O)-, or a C₁₋₆₀ organic group. The organic bridging group can be cyclic or acyclic, aromatic or non-aromatic, and can further comprise heteroatoms such as halogens, oxygen, nitrogen, sulfur, silicon, or phosphorous. The C₁₋₆₀ organic group can be disposed such that the C₆ arylene groups connected thereto are each connected to a common alkylidene carbon or to different carbons of the C₁₋₆₀ organic bridging group. In an aspect, p and q are each 1, and R^{a} and R^{b} are each a C₁₋₃ alkyl group, preferably methyl, disposed meta to the hydroxy group on each arylene group.

Polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents, when used, can be added at a level of 0.05 to 2.0 wt. %.

The moldable composition of the present disclosure includes a high-heat polycarbonate, a bisphenol A homopolycarbonate, and a poly(carbonate-siloxane).

High-heat polycarbonate as used herein means a polycarbonate having a glass transition temperature (Tg) of 155 °C or higher, for example, 170 °C or higher, determined per ASTM D3418 with a 20 °C/min heating rate. The high-heat polycarbonate includes a high-heat carbonate group, optionally together with a low-heat carbonate group. A combination of different high-heat groups or low-heat groups can be used.

The high-heat polycarbonate is derived from a high-heat bisphenol monomer, preferably having at least 19 carbon atoms. As used herein, a high-heat bisphenol monomer is a monomer where the corresponding homopolycarbonate of the monomer has a glass transition temperature (Tg) of 155 °C or higher determined according to ASTM D3418 at a 20°C per minute heating rate.

Examples of such high-heat bisphenol groups include groups of formulas (4) to (10) 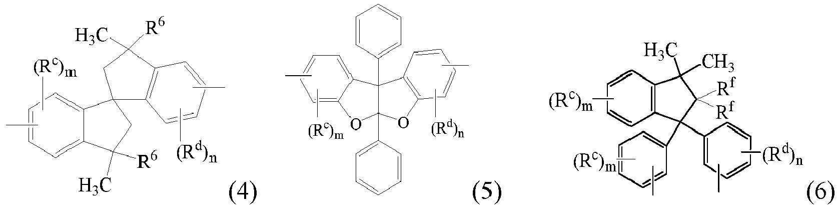 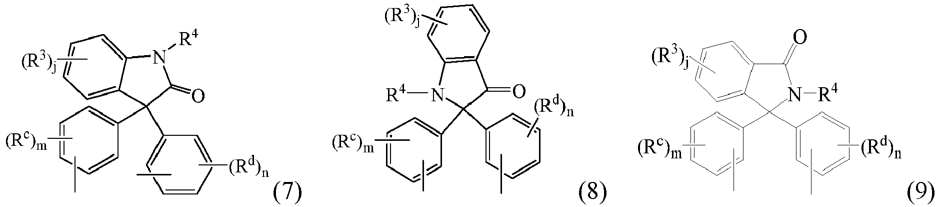 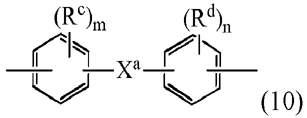 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R^{f} together are a carbonyl group, each R³ is independently C₁₋₆ alkyl, R⁴ is hydrogen, C₁₋₆ alkyl, or phenyl optionally substituted with 1 to 5 C₁₋₆ alkyl groups, R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or -(Q^{a})ₓ-G-(Q^{b})_{y}- group, wherein Q^{a} and Q^{b} are each independently a C₁₋₃ alkylene, G is a C₃₋₁₀ cycloalkylene, x is 0 or 1, and y is 0 or 1, and j, m, and n are each independently 0 to 4. A combination of high-heat bisphenol groups can be used.

In an aspect, R^{c} and R^{d} are each independently a C₁₋₃ alkyl, or C₁₋₃ alkoxy, each R⁶ is methyl, each R³ is independently C₁₋₃ alkyl, R⁴ is methyl, or phenyl, each R⁶ is independently C₁₋₃ alkyl, or phenyl, preferably methyl, X^{a} is a C₆₋₁₂ polycyclic aryl, C₃₋₁₈ mono-or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or -(Q¹)ₓ-G-(Q²)_{y}-group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Exemplary high-heat bisphenol groups include those of formulas (9a) and (10a) to (10k) 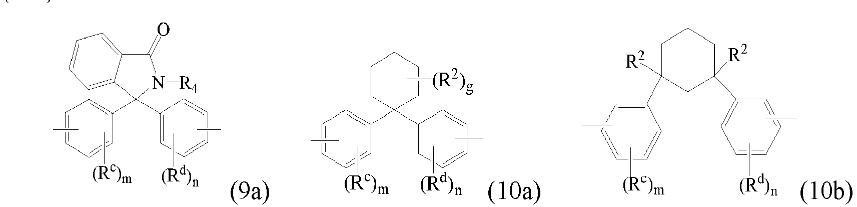 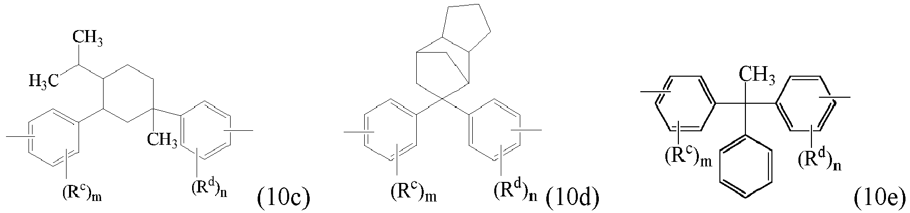 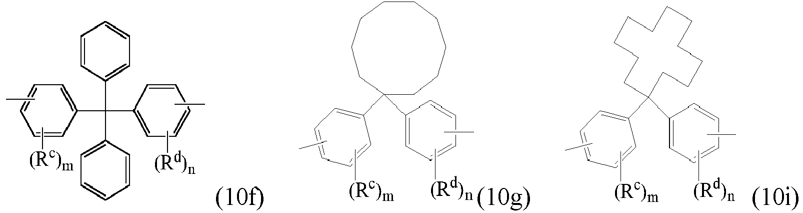 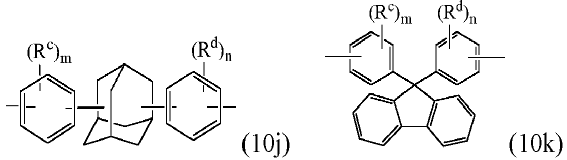 wherein R^{c} and R^{d} are the same as defined for formulas (4) to (10), each R² is independently C₁₋₄ alkyl, m and n are each independently 0 to 4, each R³ is independently C₁₋₄ alkyl or hydrogen, R⁴ is C₁₋₆ alkyl or phenyl optionally substituted with 1 to 5 C₁₋₆ alkyl groups, and g is 0 to 10. In a specific aspect each bond of the bisphenol group is located para to the linking group that is X^{a}. In an aspect, R^{c} and R^{d} are each independently a C₁₋₃ alkyl, or C₁₋₃ alkoxy, each R² is methyl, x is 0 or 1, y is 1, and m and n are each independently 0 or 1.

The high-heat bisphenol group is preferably N-phenyl phenolphthalein bisphenol, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, and optionally, 1,1-bis(4-hydroxyphenyl)-3,3,5-trimethyl-cyclohexane. In an aspect, the high-heat bisphenol group can be N-phenyl phenolphthalein bisphenol and 1,1-bis(4-hydroxyphenyl)-3,3,5-trimethylcyclohexane. In an aspect, the high-heat bisphenol group can be N-phenyl phenolphthalein bisphenol. In an aspect, the high-heat bisphenol group can be of formula (9a-2) or (10a-2) 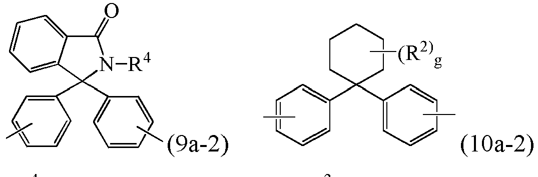 wherein R⁴ is methyl or phenyl, each R² is methyl, and g is 1 to 4. In an aspect, the high-heat bisphenol group is derived from 2-phenyl-3,3'-bis(4-hydroxyphenyl) phthalimidine (PPPBP) or from 1,1-bis(4-hydroxyphenyl)-3,3,5-trimethyl-cyclohexane (BP-TMC).

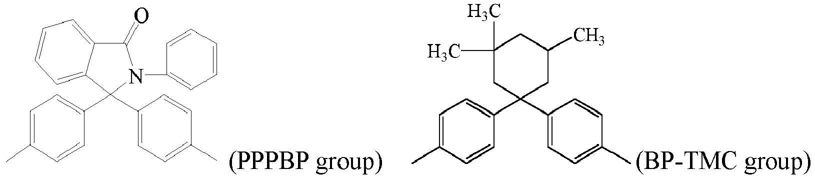

When present, the low-heat carbonate group can be a low-heat bisphenol A group. A low-heat bisphenol A monomer provides the low-heat group of formula (11).

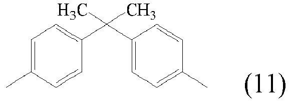

The high-heat polycarbonate can be present in the composition in an amount of 35 to 80 weight percent (wt%), based on the total weight of the composition. Within this range, the high-heat polycarbonate can be present in an amount of at least 40 wt%, or at least 45 wt%, or at least 50 wt% or at least 55 wt%, or at least 60 wt%, or at least 65 wt%, or at least 70 wt%. Also within this range, the high-heat polycarbonate can be present in an amount of less than or equal to 75 wt%, or less than or equal to 70 wt%, or less than or equal to 65 wt%, or less than or equal to 60 wt%, or less than or equal to 55 wt%, or less than or equal to 50 wt%. For example, the high-heat polycarbonate can be present in an amount of 35 to 70 wt%, or 45 to 70 wt% or 55 to 70 wt%. Other combinations of the foregoing amounts are also possible.

The composition further comprises a bisphenol A homopolycarbonate composition (also referred to herein as "the homopolycarbonate composition" for brevity). The bisphenol A homopolycarbonate composition comprises a bisphenol A homopolymer having a weight average molecular weight of 16,000 to 19,500 grams per mole, or 17,000 to 19,000 grams per mole, or 17,500 to 19,000 grams per mole, as determined by gel permeation chromatography (GPC) using polystyrene standards and calculated for polycarbonate. GPC samples are prepared at a concentration of 1 mg per ml and are eluted at a flow rate of 1.5 ml per minute. As used herein, "using polystyrene standards and calculated for polycarbonate" refers to measurement of the retention time by GPC, fitting the retention time value to a curve for polystyrene and calculating the molecular weight for polycarbonate.

In an aspect, the homopolycarbonate composition can optionally further comprise one or more additional bisphenol A homopolycarbonates. For example, the homopolycarbonate composition can further comprise a bisphenol A homopolycarbonate having a weight average molecular weight of 20,000 to 25,000 grams per mole, preferably 21,000 to 25,000 grams per mole, more preferably 21,000 to 23,000 grams per mole, as determined by GPC using polystyrene standards and calculated for polycarbonate. The homopolycarbonate composition can further comprise a bisphenol A homopolycarbonate having a weight average molecular weight of 26,000 to 40,000 grams per mole, preferably 27,000 to 35,000 grams per mole, as determined by gel permeation chromatography using polystyrene standards and calculated for polycarbonate. Combinations of the foregoing bisphenol A homopolycarbonates can be used. In an aspect, bisphenol A homopolycarbonates other than the bisphenol A homopolymer having a weight average molecular weight of 17,000 to 19,000 grams per mole can be minimized or excluded from the composition (e.g., present in an amount of no more than 2 weight percent, or no more than 1 weight percent, or no more than 0.1 weight percent, or no more than 0.01 weight percent).

The bisphenol A homopolycarbonate composition can be present in the composition in an amount of 10 to 65 weight percent, based on the total weight of the composition. For example, the bisphenol A homopolycarbonate composition can be present in an amount of 10 to 59 wt%, or 25 to 50 wt%, or 30 to 65 wt%, or 30 to 45 wt %, each based on the total weight of the composition.

In addition to the high-heat polycarbonate and the bisphenol A homopolycarbonate, the composition further comprises a poly(carbonate-siloxane), also referred to in the art as a polycarbonate-polysiloxane copolymer. The poly(carbonate-siloxane) has a siloxane content of 10 to 70 weight percent, based on the total weight of the poly(carbonate-siloxane). The poly(carbonate-siloxane) comprises polycarbonate blocks comprising repeating units according to Formula (1) and polysiloxane blocks.

The polysiloxane blocks comprise repeating diorganosiloxane units as in formula (12) 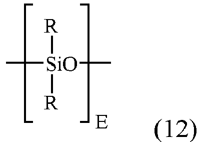 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (12) can vary widely depending on the type and relative amount of each component in the moldable composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used. A combination of a first and a second (or more) poly(carbonate-siloxane) copolymers can be used, wherein the average value of E of the first copolymer is less than the average value of E of the second copolymer.

In an aspect, the polysiloxane blocks are of formula (13) 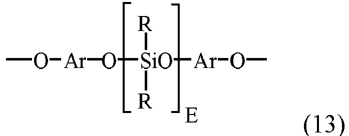 wherein E and R are as defined if formula (12); each R can be the same or different, and is as defined above; and Ar can be the same or different, and is a substituted or unsubstituted C₆₋₃₀ arylene, wherein the bonds are directly connected to an aromatic moiety. Ar groups in formula (13) can be derived from a C₆₋₃₀ dihydroxyarylene compound, for example a dihydroxyarylene compound of formula (3) or an aromatic dihydroxy compound of formula (14) 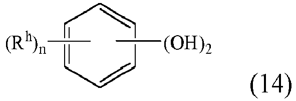 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine. Particular dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (15) 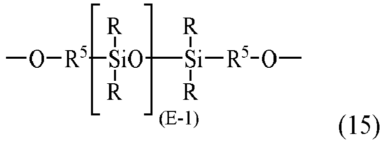 wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (16): 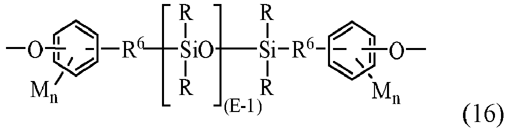 wherein R and E are as defined above. R⁶ in formula (16) is a divalent C₂₋₈ aliphatic group. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 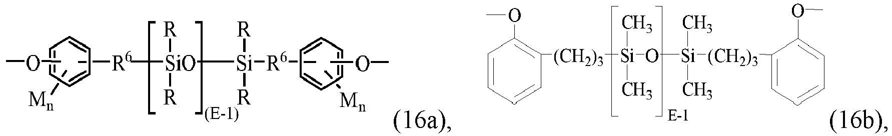 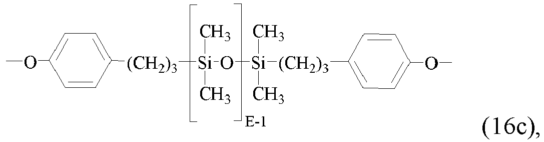 or a combination thereof, wherein E has an average value of 2 to 200, 2 to 125, 5 to 125, 5 to 100, 5 to 50, 20 to 80, or 5 to 20.

Blocks of formula (16) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

Transparent poly(carbonate-siloxane) copolymers comprise carbonate units (1) derived from bisphenol A, and repeating siloxane units (16a), (16b), (16c), or a combination thereof (preferably of formula 16a), wherein E has an average value of 4 to 50, 4 to 15, preferably 5 to 15, more preferably 6 to 15, and still more preferably 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(carbonate-siloxane) copolymers.

The poly(carbonate-siloxane) has a siloxane content of 10 to 70 wt%, based on the total weight of the poly(carbonate-siloxane). Within this range, the poly(carbonate-siloxane) can have a siloxane content of 15 to 70 wt%, or 20 to 70 weight percent, or 30 to 70 weight percent, or greater than 30 to 70 wt%, 35 to 70 wt%, 35 to 65 wt%, 35 to 55 wt%, or 35 to 50 wt%, each based on the total weight of the poly(carbonate-siloxane).

In an aspect, the poly(carbonate-siloxane) has a siloxane content of 30 to 70 wt%. In an aspect, the poly(carbonate-siloxane) having a siloxane content of 30 to 70 wt% can have a weight average molecular weight of 21,000 to 50,000 g/mol. Within this range, the weight average molecular weight can be 25,000 to 45,000 g/mol, or 30,000 to 45,000 g/mol, or 32,000 to 43,000 g/mol, or 34,000 to 41,000 g/mol, or 35,000 to 40,000 g/mol. In an aspect, the poly(carbonate-siloxane) can have a weight average molecular weight of 26,000 to 45,000 g/mol, or 30,000 to 45,000 g/mol, or 35,000 to 40,000 g/mol. The weight average molecular weight can be measured by gel permeation chromatography using a crosslinked styrene-divinyl benzene column, at a sample concentration of 1 milligram per milliliter, using polystyrene standards and calculated for polycarbonate.

The poly(carbonate-siloxane)s may have a melt volume flow rate, measured at 300 °C/1.2 kg, of 1 to 50 cubic centimeters per 10 minutes (cc/10 min), preferably 2 to 30 cc/10 min. Combinations of the poly(carbonate-siloxane)s of different flow properties can be used to achieve the overall desired flow property.

The poly(carbonate-siloxane) can be present in the composition in an amount effective to provide 0.1 to 4 wt%, or 0.5 to 3 wt%, or 0.5 to 2 wt%, or 0.5 to 1.5 wt% siloxane, each based on the total weight of the composition.

The poly(carbonate-siloxane) can be present in the composition in an amount of 1 to 10 wt%, based on the total weight of the composition. Within this range, the poly(carbonate-siloxane) can be present in an amount of 1 to 8 wt%, or 2 to 7 wt% or 3 to 6 wt%, each based on the total weight of the composition.

In an aspect, the composition comprises less than or equal to 5 wt% or less than or equal to 1 wt%, or less than or equal to 0.1 wt% of an auxiliary poly(carbonate-siloxane) copolymer comprising 70 to 98 wt%, more preferably 75 to 97 wt% of carbonate units and less than 30 wt%, or 2 to less than 30 wt%, or 3 to 25 wt% siloxane units. In an aspect, the auxiliary poly(carbonate-siloxane) copolymer can be excluded from the composition.

In addition to the high-heat polycarbonate, the bisphenol A homopolycarbonate composition, and the poly(carbonate-siloxane), the moldable composition can optionally include an additive composition. The additive composition can include various additives ordinarily incorporated into polymer compositions of this type, with the proviso that the additive(s) are selected so as to not significantly adversely affect the desired properties of the thermoplastic composition, in particular mold release and metal adhesion. Such additives can be mixed at a suitable time during the mixing of the components for forming the composition. Additives include processing aids, fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardant, hydrostabilizers, epoxy resins, and anti-drip agents. A combination of additives can be used, for example a combination of one or more of a hydrostabilizer, an epoxy resin, an anti-drip agent, a processing aid, a heat stabilizer, an ultraviolet light stabilizer, a colorant, an inorganic filler, preferably a clay. In general, the additives are used in the amounts generally known to be effective. For example, the total amount of the additives (other than any impact modifier, filler, or reinforcing agents) can be 0.1 to 10 wt%, or 0.2 to 8 wt%, or 0.2 to 5 wt%, or 0.2 to 2 wt%, or 0.2 to 1 wt%, based on the total weight of the polycarbonate composition.

In an aspect, the moldable composition comprises 35 to 70 wt% of a high-heat copolycarbonate derived from N-phenyl phenolphthalein bisphenol and bisphenol A; 30 to 65 wt% of the bisphenol A homopolycarbonate composition; 1 to 8 wt% of the poly(carbonate-siloxane); and 0.2 to 8 wt% of the additive composition; each based on the total weight of the composition.

In an aspect, the moldable composition comprises 55 to 70 wt% the high-heat copolycarbonate derived from N-phenyl phenolphthalein bisphenol and bisphenol A; 30 to 45 wt% of the homopolycarbonate composition; 3 to 6 wt% of the poly(carbonate-siloxane); and 0.2 to 8 wt% of the additive composition; each based on the total weight of the composition.

The moldable composition can be manufactured by various methods known in the art. For example, powdered polycarbonate, and other optional components are first blended, optionally with any filler, in a high-speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compound into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

The moldable composition can exhibit one or more advantageous properties. For example, the moldable composition can have a melt flow viscosity ratio of greater than 40 cubic centimeters per 10 minutes, as determined according to ASTM D1238-04 at 330°C using a 2.16 kilogram load and a 360 second dwell time. The moldable composition can exhibit an average ejection force of less than 1000 pound-force determined as described in the working examples at a cooling time of 40 seconds and a pack pressure of 45 pounds per square inch. In an aspect, the moldable composition can exhibit both the above described melt flow viscosity and average ejection force.

In an aspect, the moldable composition can further exhibit a glass transition temperature of 175 °C or higher, or 175 to 200 °C, or 175 to 195°C, or 182 to 195 °C, each determined according to ASTM D3418 at a 20 °C per minute heating rate. In an aspect, a molded sample of the moldable composition can further exhibit a heat deflection temperature of 145 to 170 °C, or 160 to 170 °C, each according to ASTM D648 at 0.45 megapascals at a thickness of 3.2 millimeters. In an aspect, a molded sample of the moldable composition can further exhibit a heat deflection temperature of 133 to 159 °C, or 145 to 159 °C, each according to ASTM D648 at 1.82 megapascals. In an aspect, a molded sample of the moldable composition can further exhibit a notched Izod impact of at least 70 Joules per meter (J/m), or 70 to 175 J/m, or 100 to 170 J/m, or 125 to 165 J/m, each at 23 °C according to ASTM D256. The moldable composition can exhibit one, two, three, or each of the foregoing properties.

In an aspect, the moldable composition can have excellent optical properties, for example a low haze of less than 1%, measured on a 3.2 millimeter molded plaque according to ASTM D1003-00. In an advantageous feature, the moldable composition can have a haze onset temperature of 165 to 175 °C, determined as further described in the working examples below. For example, the haze onset temperature can be determined by heating a sample of the composition at a suitable rate (e.g., 5°C per hour) until any haze is detected visually (e.g., by eye).

Shaped, formed or molded articles comprising the moldable composition are also provided. The moldable composition can be molded into useful shaped articles by a variety of methods, such as injection molding, extrusion, rotational molding, blow molding and thermoforming. The moldable composition of the present disclosure can be used to form various molded articles. In an aspect, the desirable combination of properties of the composition can make it particularly well suited for automotive lighting applications. Thus a molded article comprising the composition represents another aspect of the present disclosure. In an aspect, the article can be a lighting article, for example an optical reflector or a component of a reflector. Reflectors comprising the composition can be used in, for example, automotive headlamps, headlamp bezels, headlight extensions and headlamp reflectors, for indoor illumination, for vehicle interior illumination, and the like. In an aspect, the molded article can further comprise a metallized layer disposed on at least a portion of a surface of the molded article.

Metallized articles comprising a metal layer on a surface of the molded article can be prepared by molding the composition a predetermined mold selected for the desired article as described above, and subjecting the molded article to a metallization process (e.g., vacuum deposition processes, vacuum sputtering processes, or a combination thereof). An exemplary method can include the general steps of an initial pump down on a molded article in a vacuum chamber; a glow discharge/plasma clean to prepare the article surface for metallization; and metal deposition and application of a topcoat. The surface of the molded item can be cleaned and degreased before vapor deposition in order to increase adhesion. A base coat can optionally be applied before metallization, for example, to improve metal layer adhesion. In certain aspects, the metallized article is manufactured without applying a base coat prior to metallization. Metal deposition can be for a suitable time to achieve a desired metal layer thickness, for example 1 to 5 minutes, or 1 to 2 minutes. A method of forming a metallized layer is further described in the working examples below.

Exemplary metals for metallization include, but are not limited to, chromium, nickel, aluminum, or a combination thereof. The metal can be deposited to a selected thickness of a metal layer on the surface of the article, for example 10 to 500 nanometers (nm), 50 to 400 nm, 10 to 300 nm, 50 to 300 nm, 50 to 200 nm, 75 to 175 nm, 100 to 150 nm, or 110 to 130 nm. The thickness of the metal layer (e.g., an aluminum layer) can be 50 nm, 55 nm, 60 nm, 65 nm, 70 nm, 75 nm, 80 nm, 90 nm, 95 nm, 100 nm, 105 nm, 110 nm, 115 nm, 120 nm, 125 nm, 130 nm, 135 nm, 140 nm, 145 nm, 150 nm, 155 nm, 160 nm, 165 nm, 170 nm, 175 nm, 180 nm, 185 nm, 190 nm, 195 nm, or 200 nm.

When a topcoat (e.g., a siloxane hard-coat) is present, the topcoat can have a thickness of, for example, 5 to 150 nm, 10 to 100 nm, 30 to 75 nm, 40 to 60 nm, or 45 to 55 nm. The thickness of the topcoat can be 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, or 100 nm.

The surfaces of the molded items are smooth and good gloss can be obtained even by direct metal vapor deposition without treating the molded item with primer. Moreover, because the release properties of the molded item during injection molding are good, the surface properties of the molded item are superior without replication of mold unevenness.

The articles, in particular lighting articles, can have one or more of the following properties: very low mold shrinkage; good surface gloss even when metal layers are directly vapor deposited; no residue on the mold after long molding runs; and the vapor deposited surfaces do not become cloudy or have rainbow patterns even on heating of the vapor deposited surface. The articles further can have good heat stability.

The moldable compositions provided herein therefore provide an unexpected combination of good optical qualities, thermal properties, rheological properties, and mechanical properties that exceed currently available technologies. In addition, the compositions can be used to prepare metallized articles to meet design demands. Thus, a significant improvement in polycarbonate compositions and articles (e.g., metallized articles) prepared therefrom is provided.

This disclosure is further illustrated by the following examples, which are nonlimiting.

### EXAMPLES

The materials shown in Table 1 were used in the following examples.

**Table 1**

| Component | Description | Source |
|---|---|---|
| HHPC-1 | Poly(N-phenylphenolphthaleinylbisphenol, 2,2-bis(4-hydro)carbonate-cobisphenol A carbonate), 35 mol% PPPBP units, Mw = 25,000 g/mol determined via GPC using polystyrene standards and calculated for polycarbonate, made by interfacial polymerization, PCP end-capped, PDI = 2 to 3 | SABIC |
| HHPC-2 | Poly(N-phenylphenolphthaleinylbisphenol, 2,2-bis(4-hydro)carbonate-cobisphenol A carbonate), 45 mol% PPPBP units, Mw = 23,000 g/mol determined via GPC using polystyrene standards and calculated for polycarbonate, made by interfacial polymerization, PCP end-capped, PDI = 2.3 | SABIC |
| PC-Si-20 | Poly(bisphenol A carbonate-dimethylsiloxane) copolymer produced via interfacial polymerization, 20 wt% siloxane, average siloxane block length = 45 units (D45), Mw = 29,000-31,000 g/mol as per GPC using polystyrene standards and calculated for polycarbonate, para-cumylphenol (PCP) end-capped, polydispersity = 2 to 3 | SABIC |
| PC-Si-40 | Polycarbonate-siloxane copolymer having a siloxane content of 40 wt%, average PDMS block length of 45 units, having an Mw of 37,000-38,000 g/mole as determined by gel permeation chromatography using polystyrene standards and calculated for polycarbonate, produced by interfacial polymerization, PCP-endcapped | SABIC |
| PC-1 | Bisphenol A polycarbonate homopolymer, prepared by interfacial process, Mw = 21,000 to 23,000 g/mol as per GPC using polystyrene standards and calculated for polycarbonate, PCP-endcapped. | SABIC |
| PC-2 | Bisphenol A polycarbonate homopolymer, prepared by interfacial process, Mw = 29,000 to 31,000 g/mol as per GPC using polystyrene standards and calculated for polycarbonate | SABIC |
| PC-3 | Bisphenol A polycarbonate homopolymer, prepared by interfacial process, Mw = 18,000 g/mol as per GPC using polystyrene standards and calculated for polycarbonate, PCP-endcapped | SABIC |
| LLDPE | Linear low density polyethylene | Exxon Mobil |
| AO | Hindered phenol antioxidant | BASF |
| PETS | Pentaerythritol tetrastearate, >90% esterified | FACI |
| Phosphite | Tris(2,4-di-tert-butylphenyl) phosphite, available as IRGAFOS 168 | BASF |
| CB | Carbon black pigment medium color powder | |

Typical compounding procedures for the compositions are as follows: All raw materials are pre-blended and then extruded using a twin extruder. The composition was melt-kneaded, extruded, cooled through a water bath and pelletized.

The extruded pellets were molded into testing specimens after drying the extruded pellets at 120°C for 3 hours using injection molding.

Metallization of samples was carried out using standard procedures to build up an aluminum layer having a thickness of about 120 nanometers. For example, samples were dried at 140 °C for 4 hours. Glow discharge pretreatment was conducted in air at a pressure of 10⁻¹ Mbar using a 4 kV voltage for 1 minute. Aluminum was thermally evaporated for 2 minutes at a pressure of 10⁻⁵ Mbar to build up the 120 nm Al layer. A protective layer was formed by subsequent glow discharge treatment in air at a pressure of 10⁻¹ Mbar using a 4 kV voltage for 1 minute.

Testing methods and specimen type for determining physical properties are described in Table 2.

**Table 2**

| Property | Standard or technique | Conditions | Specimen Type |
|---|---|---|---|
| MVR | ASTM D1238-04 | 300 °C, 2.16 kg, 360 sec; | Pellets |
| | | 300 °C, 2.16 kg, 1080 sec | |
| | | 330 °C, 2.16 kg, 360 sec; | |
| | | 330 °C, 2.16 kg, 1080 sec | |
| Tensile | ASTM D638 | 23 °C, 3.2 mm | Ba r- 127 mm x 12.7 mm x 3.2 mm |
| Flexural | ASTM D790 | 23 °C, 3.2 mm | Ba r- 127 mm x 12.7 mm x 3.2 mm |
| HDT | ASTM D648 | 0.45 MPa; | Bar - 127 mm x 12.7 mm x 3.2 mm |
| | | 1.82 MPa | |
| Notched Izod | ASTM D256 | 23 °C | Bar - 63.5 mm x 12.7 mm x 3.2 mm |
| High shear viscosity | ISO 11443 | 300 °C 330 °C | |

Mold release was determined by measuring ejection force using a cup-tool injection molding process. The cup tool had a 1° taper at the main part of the cup. The mouth of the cup was flared at an exaggerated angle relative to the main part of the cup. The top of the cup tool has a small hole to prevent a vacuum effect when the part is being ejected. Finally, the tool itself is not treated with any external mold release aids to prevent the build-up of unwanted films on the surface of the tool. An E-dart system data acquisition device manufactured by RJG was used to record process information in the injection molding process. For the present examples, a force transducer was used to record the ejection force for a two second period starting when the press opens. Part ejection force for 10 samples was measured when cooling time was 40 seconds and pack pressure was 45 pounds per square inch.

Metal adhesion was determined by visual evaluation of a cross-hatch test. The cross-hatch test was carried out following the ASTM 3359 standard. A lattice pattern was obtained by making 6 parallel cuts with a cutting tool on the metal surface of a metallized sample. Another six cuts perpendicular to the original cuts is then made to create a lattice of 25 squares. All loose material was removed with a brush. The lattice pattern was then covered with tape (Tesa 4651). The tape was quickly removed, leaving the metal layer for evaluation. The crosshatched area is evaluated using the scale GT0, GT1, GT2, GT3, GT4, and GT5 depending on the degree of metal removal around the crosscuts, where GT0 is no or very little metal removed, GT2 and higher represents increasing amounts of metal removed, and GT5 indicates complete removal of metal from the crosshatched areas.

Haze onset is the lowest failing temperature, i.e., where the metallized surface shows haze. Haze onset temperature was determined by heating a sample at a rate of 5°C per hour, until visible haze was detected (e.g., visually, by eye). Ten samples of the material were tested. Haze onset was determined as the highest temperature at which no visual defects appear.

Humidity exposure testing was conducted by storing the samples for 3, 6, or 10 days at 98% relative humidity, 40°C, followed by a visual check of the samples and performance of the cross-hatch adhesion test as described above.

### Physical Properties

Table 3 shows the compositions and physical properties for Comparative Examples 1 to 3 and Examples 4 to 7. Unless specifically indicated otherwise, the amount of each component is in wt%, based on the total weight of the composition. The Figure shows mold release properties.

**Table 3**

| Component | | Unit | CE1 | CE2 | CE3 | EX1 | EX2 | EX3 | EX4 |
|---|---|---|---|---|---|---|---|---|---|
| HHPC-1 | | % | 64 | 64 | 16 | 64 | 64 | 16 | 16 |
| HHPC-2 | | % | | | 35 | | | 35 | 35 |
| PC-1 | | % | 20 | | | | | | |
| PC-2 | | % | 15.5 | | | | | | |
| PC-3 | | % | | 35.4 | 48.4 | 29.4 | 32.4 | 42.4 | 45.4 |
| LLDPE | | % | | 0.13 | 0.13 | | | | |
| PC-Si-20 | | % | | | | 6 | | 6 | |
| PC-Si-40 | | % | | | | | 3 | | 3 |
| PETS | | % | 0.27 | 0.27 | 0.27 | 0.4 | 0.4 | 0.4 | 0.4 |
| AO | | % | 0.04 | 0.04 | 0.04 | 0.04 | 0.04 | 0.04 | 0.04 |
| Phosphite | | % | 0.08 | 0.08 | 0.08 | 0.08 | 0.08 | 0.08 | 0.08 |
| CB | | % | 0.1 | 0.1 | 0.1 | 0.1 | 0.1 | 0.1 | 0.1 |

| Property | Condition | Unit | CE1 | CE2 | CE3 | EX1 | EX2 | EX3 | EX4 |
|---|---|---|---|---|---|---|---|---|---|
| MVR | 300°C/2.16 kg/360 sec | cm³/10 min | 13.7 | 21.1 | 19.6 | 18.4 | 19.5 | 15.1 | 17.4 |
| | 300°C/2.16 kg/1080 sed | cm³/10 min | 14.4 | 21.7 | 20.1 | 19.3 | 20.3 | 14.7 | 17.9 |
| | 330°C/2.16 kg/360 sed | cm³/10 min | 41.4 | 62.6 | 58.9 | 55.2 | 58.4 | 44.3 | 52.5 |
| | 330°C/2.16 kg/1080 sed | cm³/10 min | 43.2 | 70.4 | 62.7 | 61.7 | 62.9 | 48.7 | 56 |
| Tensile | Modulus of Elasticity | MPa | 2464 | 2478 | 2480 | 2402 | 2420 | 2414 | 2506 |
| | Tensile strength at yield | MPa | 73 | 73.3 | 73.6 | 71.2 | 71.2 | 72.3 | 74.8 |
| | Tensile strength at break | MPa | 60.5 | 57.1 | 58.7 | 53.4 | 55.2 | 57.2 | 58.3 |
| | % Elongation at yield | % | 7.09 | 7.06 | 6.94 | 6.82 | 6.82 | 6.85 | 7.01 |
| | % Elongation at break | % | 85.38 | 73.44 | 75.55 | 30.43 | 46.38 | 80.06 | 73.8 |
| Flex | Flexural modulus | MPa | 2500 | 2500 | 2510 | 2460 | 2460 | 2470 | 2530 |
| | Flex. stress at 5% Strain | MPa | 103 | 103 | 104 | 102 | 103 | 103 | 106 |
| | Flexural stress at Yield | MPa | 116 | 117 | 118 | 114 | 116 | 116 | 120 |
| HDT | 0.45 MPa | °C | 165.9 | 166.2 | 165.2 | 164.5 | 164.3 | 165.7 | 165.7 |
| | 1.82 MPa | °C | 152.7 | 152.9 | 151.7 | 151.1 | 150.8 | 153.6 | 153.5 |
| Notched Izod | Ductility | % | 0 | 0 | 0 | 0 | 0 | 0 | 0 |
| | Impact Strength | J/m | 102 | 95.7 | 93.8 | 141 | 160 | 132 | 92.2 |
| Viscosity . 300°C | App. shear rate | 1/s | 640 | 640 | 640 | 640 | 640 | 640 | 640 |
| | App. Viscosity | Pa·s | 526.7 | 402.6 | 421.8 | 420.8 | 400.6 | 462.6 | 451.8 |
| Viscosity , 330°C | App. shear rate | 1/s | 640 | 640 | 640 | 640 | 640 | 640 | 640 |
| | App. Viscosity | Pa·s | 236.4 | 161.2 | 168.6 | 176 | 173.6 | 204.4 | 194.9 |

CE1 is a representative high heat, standard flow formulation using a typical mold release additive (PETS) and loading (0.27 wt%).

CE2 is a first high flow formulation containing an additional known mold release agent, LLDPE in an amount of 0.13 wt%. EX1 is similar to CE2 except that no LLDPE is present, and a portion of PC-3 has been replaced with 6 wt% a polys(carbonate-siloxane) containing 20 wt% siloxane units. EX2 is also similar to CE2 except that no LLDPE is present, and a portion of PC-3 has been replaced with 3 wt% of a poly(carbonate-siloxane) containing 40 wt% siloxane units. As can be seen in Table 3, the physical properties of each of CEX 2, EX1, and EX2 are similar, except that the impact properties of EX1 and EX2 are improved relative to CE2.

CE3 is a second high-flow formulation containing a copolymer with a higher mole ratio of high heat units, and LLDPE in an amount of 0.13 wt%. EX3 similar to CE2 except that no LLDPE is present, and a portion of PC-3 has been replaced with 6 wt% of a poly(carbonate-siloxane) containing 20 wt% siloxane units. EX4 is also similar to CE2 except that no LLDPE is present, and a portion of PC-3 has been replaced with 3 wt% of a poly(carbonate-siloxane) containing 40 wt% siloxane units. As can be seen in Table 3, the physical properties of each of CE3, EX3, and EX4 are similar except that the impact properties of CE3 and EX4 improved relative to CE3 and EX3. The impact properties of CE3 and EX3 are similar, showing that impact is not significantly adversely affected by the use of 6 wt% of the poly(carbonate-siloxane) containing 20 wt% siloxane units.

The Figure shows that the ejection force is lower for EX1-EX4 compared to CE1-CE3, illustrating that the presence of the poly(carbonate-siloxane) improves mold release even in the absence of an added mold release agent such as LLDPE.

### Metallization Properties

Metallization tests conducted were conducted using CE1 and EX1 and EX2. Humidity aging test was conducted to visually inspect the reflection and defects of metallized samples after 3, 6 and 10 days of aging at 98% relative humidity and 40 °C. After 10 days, cross-hatch testing was also conducted. The compositions and results are shown in Table 4.

**Table 4**

| **Component** | **Unit** | **CE1** | **EX1** | **EX2** |
|---|---|---|---|---|
| HHPC-1 | % | 64 | 64 | 64 |
| HHPC-2 | % | | | |
| PC-1 | % | 20 | | |
| PC-2 | % | 15.5 | | |
| PC-3 | % | | 29.4 | 32.4 |
| PC-Si-20 | % | | 6 | |
| PC-Si-40 | % | | | 3 |
| PETS | % | 0.27 | 0.4 | 0.4 |
| AO | % | 0.04 | 0.04 | 0.04 |
| Phosphite | % | 0.08 | 0.08 | 0.08 |
| CB | % | 0.1 | 0.1 | 0.1 |

| **Properties** | | **CE1** | **EX1** | **EX2** |
|---|---|---|---|---|
| Haze onset temperature | °C | 170 | 170 | 170 |
| Cross-hatch adhesion | | GT0 | GT0 | GT0 |
| Humidity Aging | Appearance, 3 days | + | + | + |
| | Appearance, 6 days | + | + | + |
| | Appearance 10 days | + | + | + |
| | Cross-hatch adhesion, 10 days | GT0 | GT0 | GT0 |

The results in Table 4 show that EX1 and EX2 show the same level of performance as CE1, with the benefit of easy mold release.

This disclosure further encompasses the following aspects.
Aspect 1: A moldable composition comprising 35-80 weight percent of a high-heat copolycarbonate derived from a high-heat bisphenol monomer and optionally a low-heat bisphenol A monomer, wherein the high-heat bisphenol monomer is a monomer where the corresponding homopolycarbonate of the monomer has a glass transition temperature of 155°C or higher determined according to ASTM D3418 at a 20°C per minute heating rate; 10 to 65 weight percent a bisphenol A homopolycarbonate composition comprising a bisphenol A homopolycarbonate having a weight average molecular weight of 16,000 to 19,500 grams per mole as determined by gel permeation chromatography using polystyrene standards and calculated for polycarbonate; 1 to 10 weight percent of a poly(carbonate-siloxane) having a siloxane content of 10-70 weight percent, based on the total weight of the poly(carbonate-siloxane); and optionally, 0.1 to 10 weight percent of an additive composition, wherein the moldable composition has a melt volume-flow rate of greater than 40 cubic centimeters per 10 minutes, as determined according to ASTM D1238-04 at 330°C using a 2.16 kilogram load and a 360 second dwell time, and an average ejection force of less than 1000 pound-force at a cooling time of 40 seconds and a pack pressure of 45 pounds per square inch.
Aspect 2: The moldable composition of Aspect 1, wherein a molded sample having a thickness of 3.2 millimeters has a heat deflection temperature of 145 to 170°C according to ASTM D648 at 0.45 megapascals, or a molded sample having a thickness of 3.2 millimeters has a heat deflection temperature of 133 to 159°C according to ASTM D648 at 1.8 megapascals, or a molded sample having a thickness of 3.2 millimeters has a notched Izod impact of at least 70 Joules per meter at 21°C according to ASTM D256; or a combination thereof.
Aspect 3: The moldable composition of aspect 1 or aspect 2, wherein the poly(carbonate-siloxane) has a siloxane content of 30 to 70 weight percent, based on the total weight of the poly(carbonate-siloxane).
Aspect 4: The moldable composition of any one of the preceding aspects, wherein the homopolycarbonate composition further comprises a bisphenol A homopolycarbonate having a weight average molecular weight of 20,000 to 25,000 grams per mole, preferably 21,000 to 25,000 grams per mole; a bisphenol A homopolycarbonate having a weight average molecular weight of 26,000 to 40,000 grams per mole, preferably 27,000 to 35,000 grams per mole; or a combination thereof, each as determined by gel permeation chromatography using polystyrene standards and calculated for polycarbonate.
Aspect 5: The moldable composition of any one of the preceding aspects, wherein the high-heat bisphenol monomer comprises: N-phenyl phenolphthalein bisphenol, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, and optionally, 1,1-bis(4-hydroxyphenyl)-3,3,5-trimethylcyclohexane, preferably N-phenyl phenolphthalein bisphenol and 1,1-bis(4-hydroxyphenyl)-3,3,5-trimethyl-cyclohexane, more preferably N-phenyl phenolphthalein bisphenol.
Aspect 6: The moldable composition of any one of the preceding aspects, wherein the high-heat polycarbonate is: a high-heat polycarbonate derived from N-phenyl phenolphthalein bisphenol, or a high-heat polycarbonate derived from N-phenyl phenolphthalein bisphenol and a high-heat polycarbonate derived from 1,1-bis(4-hydroxyphenyl)-3,3,5-trimethyl-cyclohexane.
Aspect 7: The moldable composition of any one of the preceding aspects, wherein the additive composition is present and comprises an anti-drip agent, an epoxy resin, a flame retardant, a hydrostabilizer, a processing aid, a heat stabilizer, an ultraviolet light stabilizer, a colorant, an inorganic filler, preferably a clay, or a combination thereof.
Aspect 8: The moldable composition of any one of the preceding aspects, comprising 35 to 70 wt% of a high-heat copolycarbonate derived from N-phenyl phenolphthalein bisphenol and bisphenol A; 30 to 65 wt% of the bisphenol A homopolycarbonate composition; 1 to 8 wt% of the poly(carbonate-siloxane); and 0.2 to 8 wt% of the additive composition; each based on the total weight of the composition.
Aspect 9: The moldable composition of aspect 8, comprising 55 to 70 wt% the high-heat copolycarbonate derived from N-phenyl phenolphthalein bisphenol and bisphenol A; 30 to 45 wt% of the homopolycarbonate composition; 3 to 6 wt% of the poly(carbonate-siloxane); and 0.2 to 8 wt% of the additive composition; each based on the total weight of the composition.
Aspect 10: The moldable composition of any one of the preceding aspects, wherein the poly(carbonate-siloxane) is present in an amount effective to provide 0.5 to 2 wt% siloxane, based on the total weight of the moldable composition.
Aspect 11: A molded article comprising the moldable composition of any one of the preceding aspects.
Aspect 12: The article of aspect 11, wherein the article is a reflector component.
Aspect 13: The molded article of aspect 11 or aspect 12, further comprising a metallized layer disposed on a surface of the molded article.
Aspect 14: The molded article of aspect 13, wherein the metallized layer comprises chromium, nickel, aluminum, or a combination thereof; and the metallized layer has a thickness of 10 to 500 nanometers.
Aspect 15: A method for forming the molded article of aspect 13 or aspect 14, comprising molding the article; and metallizing a surface of the article.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof' as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example-CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A moldable composition comprising
35-80 weight percent of a high-heat copolycarbonate derived from a high-heat bisphenol monomer and optionally a low-heat bisphenol A monomer, wherein the high-heat bisphenol monomer is a monomer where the corresponding homopolycarbonate of the monomer has a glass transition temperature of 155°C or higher determined according to ASTM D3418 at a 20°C per minute heating rate;
10 to 65 weight percent a bisphenol A homopolycarbonate composition comprising a bisphenol A homopolycarbonate having a weight average molecular weight of 16,000 to 19,500 grams per mole, preferably 17,000 to 19,000 grams per mole, more preferably 17,500 to 19,000 grams per mole, as determined by gel permeation chromatography using polystyrene standards and calculated for polycarbonate;
1 to 10 weight percent of a poly(carbonate-siloxane) having a siloxane content of 10-70 weight percent, based on the total weight of the poly(carbonate-siloxane); and
optionally, 0.1 to 10 weight percent of an additive composition,
wherein the moldable composition has
a melt volume-flow rate of greater than 40 cubic centimeters per 10 minutes, as determined according to ASTM D1238-04 at 330°C using a 2.16 kilogram load and a 360 second dwell time, and
an average ejection force of less than 1000 pound-force at a cooling time of 40 seconds and a pack pressure of 45 pounds per square inch.

2. The moldable composition of Claim 1, wherein
a molded sample having a thickness of 3.2 millimeters has a heat deflection temperature of 145 to 170°C according to ASTM D648 at 0.45 megapascals, or
a molded sample having a thickness of 3.2 millimeters has a heat deflection temperature of 133 to 159°C according to ASTM D648 at 1.8 megapascals, or
a molded sample having a thickness of 3.2 millimeters has a notched Izod impact of at least 70 Joules per meter at 23°C according to ASTM D256;
or a combination thereof.

3. The moldable composition of claim 1 or claim 2, wherein the poly(carbonate-siloxane) has a siloxane content of 30 to 70 weight percent, based on the total weight of the poly(carbonate-siloxane).

4. The moldable composition of any one of the preceding claims, wherein the homopolycarbonate composition further comprises
a bisphenol A homopolycarbonate having a weight average molecular weight of 20,000 to 25,000 grams per mole, preferably 21,000 to 25,000 grams per mole;
a bisphenol A homopolycarbonate having a weight average molecular weight of 26,000 to 40,000 grams per mole, preferably 27,000 to 35,000 grams per mole;
or a combination thereof,
each as determined by gel permeation chromatography using polystyrene standards and calculated for polycarbonate.

5. The moldable composition of any one of the preceding claims, wherein the high-heat bisphenol monomer comprises:
N-phenyl phenolphthalein bisphenol, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, and optionally, 1,1-bis(4-hydroxyphenyl)-3,3,5-trimethyl-cyclohexane,
preferably N-phenyl phenolphthalein bisphenol and 1,1-bis(4-hydroxyphenyl)-3,3,5-trimethyl-cyclohexane,
more preferably N-phenyl phenolphthalein bisphenol.

6. The moldable composition of any one of the preceding claims, wherein the high-heat polycarbonate is:
a high-heat polycarbonate derived from N-phenyl phenolphthalein bisphenol, or
a high-heat polycarbonate derived from N-phenyl phenolphthalein bisphenol and a high-heat polycarbonate derived from 1,1-bis(4-hydroxyphenyl)-3,3,5-trimethyl-cyclohexane.

7. The moldable composition of any one of the preceding claims, wherein the additive composition is present and comprises an anti-drip agent, an epoxy resin, a flame retardant, a hydrostabilizer, a processing aid, a heat stabilizer, an ultraviolet light stabilizer, a colorant, an inorganic filler, preferably a clay, or a combination thereof.

8. The moldable composition of any one of the preceding claims, comprising
35 to 70 wt% of a high-heat copolycarbonate derived from N-phenyl phenolphthalein bisphenol and bisphenol A;
30 to 65 wt% of the bisphenol A homopolycarbonate composition;
1 to 8 wt% of the poly(carbonate-siloxane); and
0.2 to 8 wt% of the additive composition;
each based on the total weight of the composition.

9. The moldable composition of claim 8, comprising
55 to 70 wt% the high-heat copolycarbonate derived from N-phenyl phenolphthalein bisphenol and bisphenol A;
30 to 45 wt% of the homopolycarbonate composition;
3 to 6 wt% of the poly(carbonate-siloxane); and
0.2 to 8 wt% of the additive composition;
each based on the total weight of the composition.

10. The moldable composition of any one of the preceding claims, wherein the poly(carbonate-siloxane) is present in an amount effective to provide 0.5 to 2 wt% siloxane, based on the total weight of the moldable composition.

11. A molded article comprising the moldable composition of any one of the preceding claims.

12. The article of claim 11, wherein the article is a reflector component.

13. The molded article of claim 11 or claim 12, further comprising a metallized layer disposed on a surface of the molded article.

14. The molded article of claim 13, wherein
the metallized layer comprises chromium, nickel, aluminum, or a combination thereof; and
the metallized layer has a thickness of 10 to 500 nanometers.

15. A method for forming the molded article of claim 13 or claim 14, comprising
molding the article; and
metallizing a surface of the article.
